# DEMANDE DE BREVET EUROPEEN

(11) **EP 3 696 017 A1**
(43) Date de publication de la demande: **19.08.2020**
(21) Numéro de dépôt: 20157320.1
(22) Date de dépôt: 14.02.2020
(51) Int. Cl.: B60N 3/10

(54) **DISPOSITIF DE MAINTIEN ET AMEUBLEMENT INTÉRIEUR D'UN VÉHICULE ASSOCIÉ**

(30) Priorité: 15.02.2019 FR 1901576
(71) Demandeur: ALSTOM Transport Technologies, 93400 Saint-Ouen-sur Seine (FR)
(72) Inventeur: LEGRAND, Eric, 59530 JOLIMETZ (FR); LEBER, Yohan, 59300 VALENCIENNES (FR); LEFEVRE, Maxime, 59300 VALENCIENNES (FR)
(74) Mandataire: Lavoix

(57) **Abrégé**

Dispositif de maintien (14) destiné à maintenir un récipient à boissons dans une position de maintien, le dispositif de maintien (14) présentant une paroi circonférentielle (16) et un fond (18), la paroi circonférentielle (16) et le fond (18) définissant un volume interne (19) apte à recevoir le récipient.

Le fond (18) comprend un orifice (36) permettant à du liquide de s'écouler du volume interne (19) vers l'extérieur du dispositif de maintien (14).

La paroi circonférentielle (16) comprend au moins un élément escamotable (30) mobile entre une position escamotée et une position déployée dans laquelle l'élément escamotable (30) fait saillie vers le volume interne (19) et est apte à maintenir le récipient dans sa position de maintien.

## Description

La présente invention concerne un dispositif de maintien, destiné à maintenir un récipient à boissons dans une position de maintien, le dispositif de maintien présentant une paroi circonférentielle et un fond, la paroi circonférentielle et le fond définissant un volume interne apte à recevoir le récipient.

Un tel dispositif de maintien est notamment monté sur un véhicule, en particulier un véhicule ferroviaire pour maintenir un récipient à boisson tel qu'une tasse, un gobelet, une canette, une bouteille ou un verre.

Un tel dispositif ne donne cependant pas entière satisfaction. En effet, ce dispositif est uniquement adapté pour maintenir des récipients d'une seule taille, ce qui limite l'utilisation du dispositif de maintien pour maintenir des récipients d'autres tailles.

Un but de l'invention est donc de proposer un dispositif de maintien apte à maintenir des récipients de tailles diverses, tout en donnant à un liquide ayant fui la possibilité de sortir du dispositif de maintien.

A cet effet, l'invention a pour objet un dispositif de maintien du type précité, dans lequel la paroi circonférentielle comprend au moins un élément escamotable mobile entre une position escamotée et une position déployée dans laquelle l'élément escamotable fait saillie vers le volume interne et est apte à maintenir le récipient dans sa position de maintien, le fond comprenant un orifice permettant à du liquide de s'écouler du volume interne vers l'extérieur du dispositif de maintien.

Dans des modes de réalisation particuliers de l'invention, le dispositif de maintien présente en outre l'une ou plusieurs des caractéristiques suivantes, prise(s) isolément ou suivant toute(s) combinaison(s) techniquement possible(s) :
- le dispositif comprend, pour chaque élément escamotable, un ressort apte à rappeler l'élément escamotable de sa position escamotée vers sa position déployée ;
- le ressort est un ressort de compression ou un ressort de torsion ;
- la paroi circonférentielle comprend une fente pour chaque élément escamotable, l'élément escamotable traversant la fente lorsqu'il occupe sa position déployée ;
- le dispositif de maintien comprend une pluralité d'éléments escamotables uniformément répartis sur la paroi circonférentielle ;
- la paroi circonférentielle présente une extrémité inférieure raccordée au fond, et une extrémité supérieure, le dispositif de maintien comprenant un rebord faisant saillie à partir de l'extrémité supérieure vers l'extérieur du dispositif de maintien ; et
- le dispositif comprend un conduit raccordé à l'orifice de sorte à guider l'écoulement du liquide du volume interne vers l'extérieur du dispositif de maintien.

L'invention a également pour objet un ameublement intérieur d'un véhicule, notamment d'un véhicule ferroviaire, comportant une table et au moins un dispositif de maintien telle que décrite ci-dessus, le dispositif de maintien étant fixé à la table.

Dans des modes de réalisation particuliers de l'invention, l'ameublement intérieur présente en outre les caractéristiques suivantes :
- la table comprend un évidement dans lequel est reçu le dispositif de maintien.

D'autres caractéristiques et avantages de l'invention apparaîtront à la lecture de la description qui va suivre, donnée uniquement à titre d'exemple et faite en se référant au dessin annexé, dans lequel la Figure unique est une vue en perspective d'un dispositif de maintien selon l'invention.

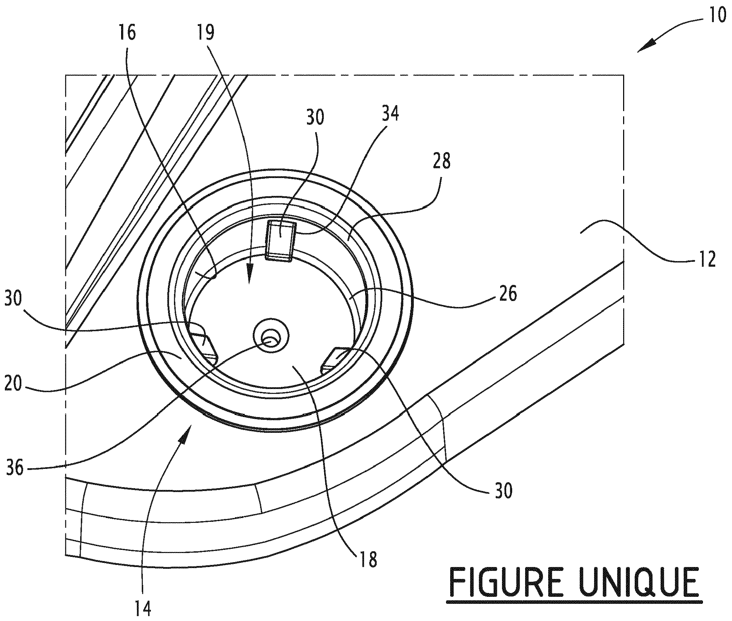

[Fig 1] La Figure unique montre un ameublement intérieur 10 d'un véhicule ferroviaire. L'ameublement intérieur 10 comporte une table 12 et au moins un dispositif de maintien 14 fixé à la table 12. Selon un mode de réalisation, l'ameublement intérieur 10 comporte deux dispositifs de maintien 14.

La table 12 est par exemple destinée à l'utilisation par un conducteur ou par un passager du véhicule ferroviaire.

La table 12 présente un évidemment formant un réceptacle à l'intérieur duquel est reçu le dispositif de maintien 14.

De préférence, le dispositif de maintien 14 est collé à l'intérieur dudit réceptacle.

Le dispositif de maintien 14 présente une paroi circonférentielle 16 et un fond 18. La paroi circonférentielle 16 et le fond 18 définissent un volume interne 19 apte à recevoir un récipient à boisson tel qu'une tasse, un gobelet, un verre, une bouteille ou une canette.

Avantageusement, le dispositif de maintien 14 comprend également un rebord 20. Le rebord 20 peut être adapté à la finition voulue, par exemple au moyen de peinture. Par exemple, le rebord 20 est peint de la même couleur que la table 12.

Le dispositif de maintien 14 comprend en outre un conduit (non-représenté sur la Figure) raccordé au fond 18, comme décrit ci-dessous.

La paroi circonférentielle 16 présente une extrémité inférieure 26 raccordée au fond 18, et une extrémité supérieure 28.

Le rebord 20 fait saillie à partir de l'extrémité supérieure 28 vers l'extérieur du dispositif de maintien 14.

La paroi circonférentielle 16 comprend au moins un élément escamotable 30. Selon le mode de réalisation représenté sur la Figure, les éléments escamotables 30 sont au nombre de trois.

De préférence, la paroi circonférentielle 16 comprend au moins deux éléments escamotables 30, de préférence au moins trois éléments escamotables 30, répartis de manière uniforme sur la paroi circonférentielle 16. Par répartition uniforme, on entend que les angles formés par deux éléments escamotables 30 voisins par rapport au centre de la paroi circonférentielle 16 sont identiques.

Une telle répartition stabilise le récipient dans le volume intérieur 19.

La paroi circonférentielle 16 comprend également, pour chaque élément escamotable 30, un ressort (non-représenté sur la Figure). Ledit ressort est par exemple un ressort de compression ou un ressort de torsion.

La paroi circonférentielle 16 comprend également, pour chaque élément escamotable 30, une fente 34 destinée à recevoir l'élément escamotable 30.

L'élément escamotable 30 est mobile entre une position escamotée et une position déployée, montrée sur la Figure. Lorsque l'élément escamotable 30 occupe sa position déployée, il fait saillie vers le volume interne 19 et est apte à maintenir des récipients présentant un diamètre inférieur à celle du volume interne 19 dans leur position de maintien.

Le ressort est apte à rappeler l'élément escamotable 30 de sa position escamotée vers sa position déployée, de sorte à forcer l'élément escamotable 30 à maintenir un récipient de taille inférieure à celle du volume interne 19.

Par ailleurs, lorsqu'un récipient de diamètre sensiblement égal au diamètre du volume interne 19 est positionné dans ce volume interne 19, les éléments escamotables 30 sont dans leur position escamotée. La paroi circonférentielle 16 et/ou les éléments escamotables 30 font pression sur le récipient afin de le maintenir en position. La pression exercée sur le récipient est telle qu'elle maintient en place le récipient sans l'endommager.

La fente 34 est configurée pour permettre la traversée de l'élément escamotable 30 vers sa position escamotée. L'élément escamotable 30 est apte à traverser la fente 34 lorsqu'il occupe sa position déployée.

Le fond 18 comprend un orifice 36 configuré pour permettre au liquide de s'écouler du volume interne 19 vers l'extérieur du dispositif de maintien 14. L'orifice 36 permet l'écoulement du liquide vers l'extérieur du dispositif de maintien 14 en cas d'une fuite de liquide hors du récipient et évite ainsi une accumulation du liquide dans le dispositif de maintien 14.

Le conduit présente avantageusement une forme coudée.

Le conduit est raccordé d'une part à l'orifice 36 de sorte à guider l'écoulement du liquide du volume interne 19 vers l'extérieur du dispositif de maintien 14, et d'autre part à un réservoir destiné à recevoir le liquide s'étant écoulé du volume interne 19.

Le réservoir est avantageusement propre à être vidé par un opérateur sans que le dispositif de maintien 14 ne soit démonté.

Grâce à l'invention décrite ci-dessus, il est maintenant possible de permettre au liquide de s'écouler du volume interne 19 vers l'extérieur du dispositif de maintien 14 en cas d'une fuite ou d'un débordement du récipient, tout en ajoutant la possibilité de maintenir des récipients présentant des tailles différentes, ce qui élargit l'utilisation d'un tel dispositif de maintien 14.

Le récipient ainsi maintenu ne glisse pas et les risques qu'il soit renversé ou que du liquide déborde hors du récipient sont minimisés.

Par ailleurs, le dispositif de maintien 14 est facile à fabriquer et à monter dans l'ameublement intérieur d'un véhicule.

Le dispositif de maintien 14 est ainsi apte à être utilisé dans différents types de véhicules, comme par exemple un bus, un tramway, ou un train.

De plus, il n'est plus nécessaire de concevoir un ameublement intérieur 12 pour chaque type de véhicule, et il est maintenant possible d'utiliser un seul dispositif de maintien 14 pour des véhicules différents, ce qui simplifie la conception et fabrication de véhicules.

## Revendications

1. Dispositif de maintien (14) destiné à maintenir un récipient à boissons dans une position de maintien, le dispositif de maintien (14) présentant une paroi circonférentielle (16) et un fond (18), la paroi circonférentielle (16) et le fond (18) définissant un volume interne (19) apte à recevoir le récipient,
**caractérisé en ce que** la paroi circonférentielle (16) comprend au moins un élément escamotable (30) mobile entre une position escamotée et une position déployée dans laquelle l'élément escamotable (30) fait saillie vers le volume interne (19) et est apte à maintenir le récipient dans sa position de maintien, le fond (18) comprenant un orifice (36) permettant à du liquide de s'écouler du volume interne (19) vers l'extérieur du dispositif de maintien (14).

2. Dispositif de maintien (14) selon la revendication 1, comprenant, pour chaque élément escamotable (30), un ressort apte à rappeler l'élément escamotable (30) de sa position escamotée vers sa position déployée.

3. Dispositif de maintien (14) selon la revendication 2, dans lequel le ressort est un ressort de compression ou un ressort de torsion.

4. Dispositif de maintien (14) selon l'une quelconque des revendications précédentes, dans lequel la paroi circonférentielle (16) comprend une fente (34) pour chaque élément escamotable (30), l'élément escamotable (30) traversant la fente (34) lorsqu'il occupe sa position déployée.

5. Dispositif de maintien (14) selon l'une quelconque des revendications précédentes, comprenant une pluralité d'éléments escamotables (30) uniformément répartis sur la paroi circonférentielle (16).

6. Dispositif de maintien (14) selon l'une quelconque des revendications précédentes, dans lequel la paroi circonférentielle (16) présente une extrémité inférieure (26) raccordée au fond (18), et une extrémité supérieure (28), le dispositif de maintien (14) comprenant un rebord (20) faisant saillie à partir de l'extrémité supérieure (28) vers l'extérieur du dispositif de maintien (14).

7. Dispositif de maintien (14) selon l'une quelconque des revendications précédentes, comprenant un conduit raccordé à l'orifice (36) de sorte à guider l'écoulement du liquide du volume interne (19) vers l'extérieur du dispositif de maintien (14).

8. Ameublement intérieur (10) d'un véhicule, notamment d'un véhicule ferroviaire, comportant une table (12) et au moins un dispositif de maintien (14) selon l'une quelconque des revendications précédentes, le dispositif de maintien (14) étant fixé à la table (12).

9. Ameublement intérieur selon la revendication 8, dans lequel la table (12) comprend un évidement dans lequel est reçu le dispositif de maintien (14).
